# EUROPÄISCHE PATENTSCHRIFT

(11) **EP 1 157 233 B1**
(45) Veröffentlichungstag und Bekanntmachung des Hinweises auf die Patenterteilung: **19.04.2006**
(21) Anmeldenummer: 00987098.1
(22) Anmeldetag: 09.11.2000
(51) Int. Cl.: F16L 1/00

(54) **VORRICHTUNG ZUM VERBINDEN EINER WELLE MIT EINEM RING**
DEVICE FOR CONNECTING A SHAFT TO A RING
DISPOSITIF POUR RELIER UN ARBRE A UN ANNEAU

(30) Priorität: 16.11.1999 DE 19954969
(43) Veröffentlichungstag der Anmeldung: 28.11.2001
(73) Patentinhaber: ROBERT BOSCH GMBH, 70442 Stuttgart (DE)
(72) Erfinder: RUSCHMANN, Gustav, 77871 Renchen (DE); NOELTER, Matthias, 77839 Lichtenau (DE)
(86) Internationale Anmeldenummer: PCT/DE2000/003913
(87) Internationale Veröffentlichungsnummer: WO 2001/036856

(56) Entgegenhaltungen:
- EP-A- 0 088 816
- FR-A- 806 791
- GB-A- 1 537 800
- US-A- 4 574 448
- HAHN O ET AL: "FERTIGUNG UND KONSTRUKTIVE GESTALTUNG GEKLEBTER WELLE-NABE- VERBINDUNGEN" STAHL UND EISEN,DE,VERLAG STAHLEISEN GMBH. DUSSELDORF, Bd. 112, Nr. 6, 15. Juni 1992 (1992-06-15), Seiten 63-66,158, XP000278753 ISSN: 0340-4803

## Beschreibung

### Stand der Technik

Die Erfindung betrifft eine Vorrichtung zum Verbinden einer Welle, insbesondere einer Schneckenwelle, mit einem Ringmagneten nach dem Oberbegriff des Hauptanspruchs 1 sowie ein dazugehöriges Verfahren nach Anspruch 10.

Es sind verschiedene Techniken zum kraftschlüssigen, drehfesten Verbinden eines Rings mit einer Welle bekannt. Eine gängige Methode ist die Befestigung und Fixierung des Rings auf der Welle mit Klebstoff, wobei dessen Dosierung und Handhabung sehr aufwendig ist und hohe Wartungs- und Reparaturkosten nach sich zieht. Außerdem besteht die Gefahr, daß sich die Verbindung aufgrund von Alterungsprozessen löst.

Eine weitere bekannte Technik besteht darin, die Welle nach Aufbringen des Rings nachträglich aufzustemmen und den Ring auf diese Weise sicher zu fixieren. Dabei jedoch kann es passieren, daß der schon fertig montierte Ring Schaden erleidet und schlimmstenfalls zerstört wird.

Weitere Techniken zum Verbinden einer welle mit einem Ring sind aus den gattungsbildenden Druckschriften FR-A-806 791 und GB-A-1 537 800 bekannt.

### Vorteile der Erfindung

Die erfindungsgemäße Vorrichtung zum Verbinden einer Welle, insbesondere einer Schneckenwelle, mit einem Ring, insbesondere einem Ringmagneten mit den Merkmalen des Hauptanspruchs hat den Vorteil, daß die Montage des Rings im Vergleich zu den bekannten Verbindungsvorrichtungen wesentlich einfacher, sicherer und effektiver erfolgt. Dies wird durch Deformationsbereiche erreicht, die an der mit der Innenfläche des Rings in Kontakt stehenden Außenfläche der Welle vorhanden sind und schon vor der eigentlichen Montage des Rings auf die Welle aufgebracht werden.

Ein weiterer Vorteil ist, daß beispielsweise umweltschädliche Klebstoffe bei der Montage entfallen können. Dies hat auch zur Folge, daß die entsprechenden Montageeinrichtungen sehr viel weniger Wartung benötigen.

Ein sehr großer Vorteil ist auch darin zusehen, daß Ankerunwuchten bedingt durch ungleichmäßige Klebstoffverteilungen von vorneherein vermieden werden.

Im Vergleich zum nachträglichen Aufstemmen der Welle hat das erfindungsgemäße Aufbringen der Deformationsbereiche vor der eigentlichen Montage des Rings bzw. des Ringmagneten den Vorteil, daß die Gefahr eines Bruchs oder der Zerstörung des Ringmagneten sehr stark vermindert ist.

Durch die in den Unteransprüchen angegebenen Maßnahmen sind vorteilhafte Weiterbildungen der Vorrichtung nach dem Hauptanspruch möglich.

So ist es äußerst vorteilhaft, wenn die Deformationsbereiche in radialer Richtung regelmäßig über die Außenfläche der Welle verteilt sind. Damit wird ein optimaler Halt des Ringes auf der Welle garantiert und die Belastung kontinuierlich über den Ring verteilt.

Als besonders vorteilhaft hat sich herausgestellt, wenn die Deformationsbereiche durch mindestens zwei Prägungen gebildet werden. Diese Prägungen können mit einem Prägestempel in die mit der Innenfläche des Rings in Verbindung zu bringende Außenfläche der Welle eingedrückt werden. Dabei vergrößert sich an den Rändern dieser Prägungen der Wellenradius, womit nach erfolgter Montage des Rings auf der Welle eine drehfeste, kraftschlüssige Verbindung zwischen Ring und Welle gewährleistet ist.

Ein besonders geeignete Deformation des Wellenmaterials wird erreicht, wenn die Prägungen eine Konusform aufweisen. Dabei ist besonders vorteilhaft, wenn der Konus der Prägungen zwischen 50° und 70°, vorzugsweise bei 60° liegt. Der Maximaldurchmesser der Prägungen liegt vorteilhafter Weise zwischen 1,5 mm und 2,4 mm, vorzugsweise bei 1,9 mm. Mit diesen Maßen lassen sich besten Ergebnisse hinsichtlich der Kraftschlüssigkeit bzw. Drehfestigkeit des Rings auf der Welle erzielen.

In bezug auf die Anordnung der Prägungen haben sich paarweise nebeneinanderliegende Prägungen als besonders vorteilhaft erwiesen. Liegen diese Doppelprägungen außerdem um 180° versetzt zueinander, dann ist eine optimale Verdeh- und Verschiebesicherheit des Rings auf der Welle gewährleistet.

Erfindungsgemäß liegen die Deformationsbereiche in axialer Richtung gesehen in etwa mittig zur Innenfläche des Rings. Ein weiterer Vorteil ergibt sich dann, wenn zusätzlich zu den Prägungen an der Außenfläche der Welle radial verlaufende Vertiefungen vorhanden sind. Damit wird die Verschiebesicherheit des Rings in axialer Richtung unterstützt.

Die Form der Prägungen ist natürlich nicht auf die Konusform beschränkt. Es sind auch andere Formen denkbar, beispielsweise Prägungen in Kerbenform. Wichtig ist nur, daß eine möglichst einfache und sichere Verbindung des Rings mit der Welle besteht.

### Zeichnung

In der Zeichnung sind zwei Ausführungsbeispiele einer erfindungsgemäßen Vorrichtung dargestellt und in der nachfolgenden Beschreibung näher erläutert.

### Es zeigen

Figur 1 schematisch eine erfindungsgemäße Vorrichtung nach dem ersten Ausführungsbeispiel sowie einen Schnitt entlang der Linie A-A,
Figur 2 eine vergrößerte Darstellung des Schnitts und
Figur 3 ein zweites Ausführungsbeispiel.

### Beschreibung

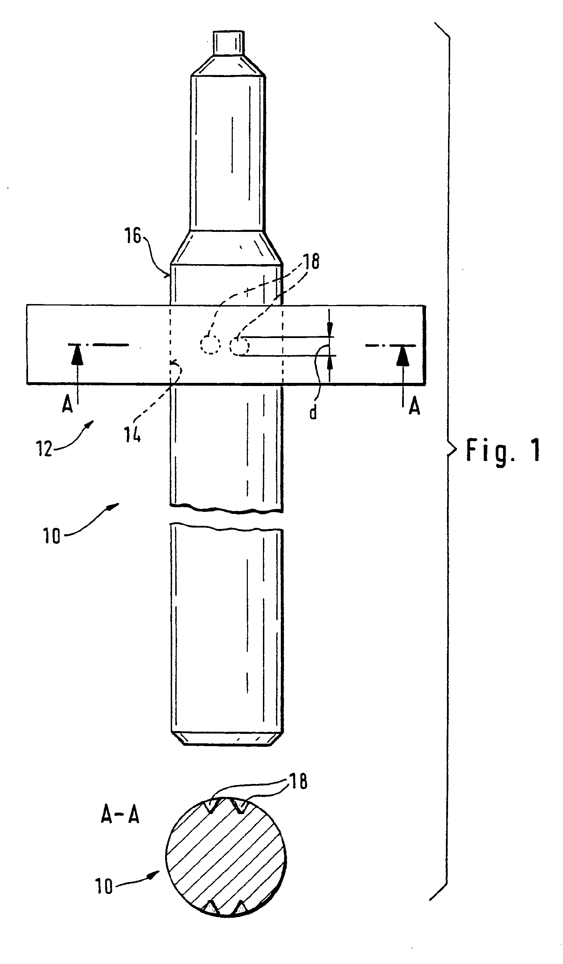

Das in Figur 1 dargestellte erste Ausführungsbeispiel einer erfindungsgemäßen Vorrichtung weist eine Welle 10 mit einer Außenfläche 16, sowie einen Ring 12 mit einer Innenfläche 14 auf. Auf der Außenfläche 16 der Welle 10 sind zwei Doppelprägungen ausgebildet, die jeweils eine konische Form besitzen. In dem Schnitt entlang der Linie A-A ist deutlich zu erkennen, daß die beiden Doppelprägungen um 180° versetzt zueinander angeordnet sind.

Der Konus der jeweiligen Prägungen beträgt 60°, ihr mit d bezeichneter Durchmesser liegt bei 1,9 mm.

Die Doppelprägungen 18 werden während des Herstellungsprozesses mit einem Prägestempel maschinell auf die Welle aufgebracht. Der Prozess des Prägens bewirkt eine Deformation des Wellenmaterials, und es bilden sich Bereiche, die einen größeren Wellenradius besitzen als der Rest der Welle.

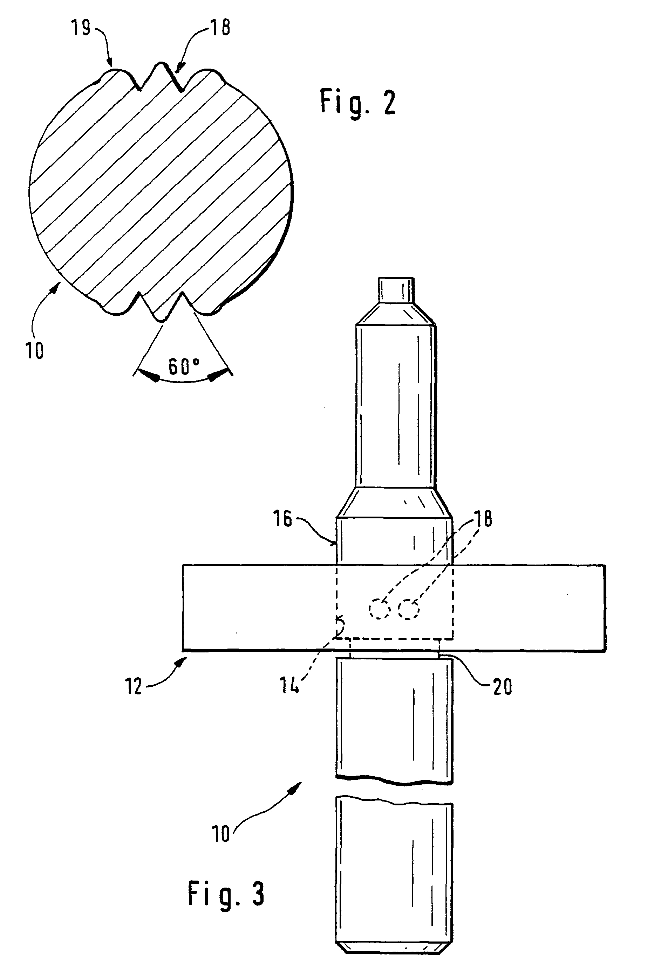

Die deformierten Bereiche sind in Figur 2 in vergrößerter Darstellung abgebildet, wobei die sich durch den Prägevorgang bildenden Erhebungen 19 überhöht dargestellt sind. Es ist deutlich zu erkennen, daß das Material der Welle besonders im Bereich der Ränder der Prägungen 18 deformiert wird.

Bei dem in Figur 3 dargestellten zweiten Ausführungsbeispiel, bei dem gleiche Merkmale mit gleichen Bezugszeichen versehen sind, ist zusätzlich zu den konusförmigen Doppelprägungen 18 eine radial um die Welle 10 verlaufende Vertiefung 20 vorhanden. Diese Vertiefung 20 kann dazu benutzt werden, um zusätzlichen Halt in axialer Richtung zu gewährleisten, indem beispielsweise Klebstoff in die Vertiefung eingespritzt wird.

## Patentansprüche

1. Vorrichtung zum Verbinden einer Welle (10), insbesondere einer Schneckenwelle, mit einem Ringmagneten (12), der eine Innenfläche (14) aufweist, die mit einer Außenfläche (16) der Welle (10) in Kontakt steht, wobei an der Außenfläche (16) der Welle (10) Deformationsbereiche (18) vorhanden sind, durch die eine kraftschlüssige, drehfeste Verbindung des Ringmagnets (12) mit der Welle (10) gewährleistet ist, **dadurch gekennzeichnet, dass** die Deformationsbereiche (18) an der Außenfläche (16) der Welle (10) im Bereich der Innenfläche (14) des montierten Ringmagneten (12) in axialer Richtung in etwa mittig zur Innenfläche (14) angeordnet sind, und die axialen Abmessungen der Deformationsbereiche (18) geringer sind als die axiale Ausdehnung der Innenfläche (14) des Ringmagnets (12).

2. Vorrichtung nach Anspruch 1, **dadurch gekennzeichnet, daß** die Deformationsbereiche (18) in radialer Richtung regelmäßig über die Außenfläche (16) der Welle (10) verteilt sind.

3. Vorrichtung nach Anspruch 1 oder 2, **dadurch gekennzeichnet, daß** die Deformationsbereiche durch mindestens zwei Prägungen (18) gebildet werden.

4. Vorrichtung nach Anspruch 3, **dadurch gekennzeichnet, daß** die Prägungen (18) eine Konusform aufweisen.

5. Vorrichtung nach Anspruch 4, **dadurch gekennzeichnet, daß** der Konus der Prägungen (18) zwischen 50° und 70°, vorzugsweise bei 60° liegt.

6. Vorrichtung nach Anspruch 4 oder 5, **dadurch gekennzeichnet, daß** der maximale Durchmesser der Prägungen (18) zwischen 1,5 mm und 2,4 mm, vorzugsweise bei 1,9 mm liegt.

7. Vorrichtung nach einem der Ansprüche 3 bis 6, **dadurch gekennzeichnet, daß** jeweils zwei der Prägungen (18) paarweise angeordnet sind.

8. Vorrichtung nach einem der Ansprüche 3 bis 7, **dadurch gekennzeichnet, daß** die Prägungen (18) um 180° versetzt zueinander angeordnet sind.

9. Vorrichtung nach einem der vorhergehenden Ansprüche, **dadurch gekennzeichnet, daß** zusätzlich zu den Prägungen (18) an der Außenfläche (16) der Welle (10) radial verlaufende Vertiefungen (20) vorhanden sind.

10. Verfahren zum Verbinden einer Welle (10), insbesondere einer Schneckenwelle, mit einem Ringmagneten (12), der eine Innenfläche (14) aufweist, die mit einer Außenfläche (16) der Welle (10) in Kontakt steht, wobei an der Außenfläche (16) der Welle (10) Deformationsbereiche (18) angeformt werden, durch die eine kraftschlüssige, drehfeste Verbindung des Ringmagnets (12) mit der Welle (10) gewährleistet ist, **gekennzeichnet durch** folgende Schritte:
- vor der eigentlichen Montage des Ringmagnets (12) werden als Deformationsbereiche (18) mindestens zwei Prägungen (18) mittels eines Prägestempels in die Außenfläche (16) eingedrückt,
- anschließend wird der Ringmagnet (12) derart auf die Welle (10) aufgeschoben, dass die Deformationsbereiche (18) der Außenfläche (16) in axialer Richtung in etwa mittig zur Innenfläche (14) des montierten Ringmagnets (12) angeordnet sind.

## Claims

1. Device for connecting a shaft (10), in particular a wormshaft, to a ring magnet (12) having an inner face (14) which is in contact with an outer face (16) of the shaft (10), the outer face (16) of the shaft (10) having deformation regions (18) which ensure a non-positive rotationally fixed connection of the ring magnet (12) to the shaft (10), **characterized in that** the deformation regions (18) on the outer face (16) of the shaft (10) are arranged, in the region of the inner face (14) of the mounted ring magnet (12), approximately centrally with respect to the inner face (14) in the axial direction, and the axial dimensions of the deformation regions (18) are smaller than the axial extent of the inner face (14) of the ring magnet (12).

2. Device according to Claim 1, **characterized in that** the deformation regions (18) are distributed regularly over the outer face (16) of the shaft (10) in the radial direction.

3. Device according to Claim 1 or 2, **characterized in that** the deformation regions are formed by at least two embossings (18).

4. Device according to Claim 3, **characterized in that** the embossings (18) have a cone shape.

5. Device according to Claim 4, **characterized in that** the cone of the embossings (18) is between 50° and 70°, preferably around 60°.

6. Device according to Claim 4 or 5, **characterized in that** the maximum diameter of the embossings (18) is between 1.5 mm and 2.4 mm, preferably around 1.9 mm.

7. Device according to one of Claims 3 to 6, **characterized in that** in each case two of the embossings (18) are arranged in pairs.

8. Device according to one of Claims 3 to 7, **characterized in that** the embossings (18) are arranged so as to be offset at 180° with respect to one another.

9. Device according to one of the preceding claims, **characterized in that** depressions (20) running radially are present, in addition to the embossings (18), on the outer face (16) of the shaft (10).

10. Method for connecting a shaft (10), in particular a wormshaft, to a ring magnet (12) having an inner face (14) which is in contact with an outer face (16) of the shaft (10), the outer face (16) of the shaft (10) having integrally formed on it deformation regions (18) which ensure a non-positive rotationally fixed connection of the ring magnet (12) to the shaft (10), **characterized by** the following steps:
- before the actual mounting of the ring magnet (12), at least two embossings (18) are indented as deformation regions (18) into the outer face (16) by means of an embossing die,
- subsequently, the ring magnet (12) is pushed onto the shaft (10) in such a way that the deformation regions (18) of the outer face (16) are arranged approximately centrally with respect to the inner face (14) of the mounted ring magnet (12) in the axial direction.

## Revendications

1. Dispositif pour relier un arbre (10), en particulier un arbre hélicoïdal, à un aimant annulaire (12) dont une surface intérieure (14) est en contact avec une surface extérieure (16) de l'arbre (10), qui présente des zones de déformation (18) afin d'assurer une jonction solidaire en rotation par complémentarité de forces de l'aimant annulaire (12) avec l'arbre (10),
**caractérisé en ce que**
les zones de déformation (18) prévues à la surface extérieure (16) de l'arbre (10) dans la zone de la surface intérieure (14) de l'aimant annulaire (12) monté sont disposées dans la direction axiale sensiblement au centre par rapport à la surface intérieure (14), et les dimensions axiales des zones de déformation (18) sont inférieures à l'étendue axiale de la surface intérieure (14) de l'aimant annulaire (12).

2. Dispositif selon la revendication 1,
**caractérisé en ce que**
dans la direction radiale les zones de déformation (18) sont réparties régulièrement sur la surface extérieure (16) de l'arbre (10).

3. Dispositif selon la revendication 1 ou 2,
**caractérisé en ce que**
les zones de déformation sont formées par au moins deux empreintes (18).

4. Dispositif selon la revendication 3,
**caractérisé en ce que**
les empreintes (18) présentent une forme conique.

5. Dispositif selon la revendication 4,
**caractérisé en ce que**
le cône des empreintes (18) a un angle de 50° à 70°, de préférence 60°.

6. Dispositif selon la revendication 4 ou 5,
**caractérisé en ce que**
le diamètre maximum des empreintes (18) se situe entre 1,5 mm et 2,4 mm, de préférence à 1,9 mm.

7. Dispositif selon l'une quelconque des revendications 3 à 6,
**caractérisé en ce que**
chaque fois deux des empreintes (18) sont disposées par paires.

8. Dispositif selon l'une quelconque des revendications 3 à 7,
**caractérisé en ce que**
les empreintes (18) sont décalées de 180° les unes des autres.

9. Dispositif selon l'une quelconque des revendications précédentes,
**caractérisé en ce qu'**
en plus des empreintes (18) la surface extérieure (16) de l'arbre (10) présente des creux (20) s'étendant radialement.

10. Procédé pour relier un arbre (10), en particulier un arbre hélicoïdal, à un aimant annulaire (12) dont une surface intérieure (14) est en contact avec une surface extérieure (16) de l'arbre (10), avec à la surface extérieure (16) de l'arbre (10) des zones de déformation (18) assurant une jonction solidaire en rotation par complémentarité de forces de l'aimant annulaire (12) avec l'arbre (10),
**caractérisé par** les étapes suivantes :
- avant le montage proprement dit de l'aimant annulaire (12) au moins deux empreintes (18) servant de zones de déformation (18) sont poinçonnées dans la surface extérieure (16) au moyen d'un poinçon, et
- ensuite l'aimant annulaire (12) est passé sur l'arbre (10) de sorte que dans la direction axiale les zones de déformation (18) de la surface extérieure (16) se trouvent sensiblement au centre par rapport à la surface intérieure (14) de l'aimant annulaire (12) monté.
